# EUROPÄISCHE PATENTSCHRIFT

(11) **EP 3 755 548 B1**
(45) Veröffentlichungstag und Bekanntmachung des Hinweises auf die Patenterteilung: **26.01.2022**
(21) Anmeldenummer: 18825880.0
(22) Anmeldetag: 05.12.2018
(51) Int. Cl.: B60B 1/04

(54) **SPEICHENRAD FÜR SCHLAUCHLOSE REIFEN**
SPOKED WHEEL FOR TUBELESS TIRES
ROUE À RAYONS POUR PNEU SANS CHAMBRE À AIR

(30) Priorität: 22.02.2018 DE 102018202660
(43) Veröffentlichungstag der Anmeldung: 30.12.2020
(73) Patentinhaber: Bayerische Motoren Werke Aktiengesellschaft, 80809 München (DE)
(72) Erfinder: ADAM, Andreas, 80999 München (DE); MOHR, Matthias, 85609 Aschheim (DE)
(86) Internationale Anmeldenummer: PCT/EP2018/083565
(87) Internationale Veröffentlichungsnummer: WO 2019/161957

(56) Entgegenhaltungen:
- EP-B1- 2 559 565
- DE-U1- 29 912 820
- DE-U1-202012 102 934
- NL-C- 96 981

## Beschreibung

Die vorliegende Erfindung betrifft ein Speichenrad für schlauchlose Reifen gemäß dem Oberbegriff des Patentanspruches 1.

Derartige Speichenräder sind aus der WO 2009081242 A1 und der EP 2 559 565 B1 bekannt.

Speichenräder für Motorräder gibt es grundsätzlich in zwei verschiedenen Ausführungen, nämlich mit Schlauch oder schlauchlos. Nachteilig an "Schlauchrädern" ist das durch den Schlauch bedingte zusätzliche Gewicht sowie die Tatsache, dass bei einem Platzen des Schlauchs ein sehr plötzlicher Luftverlust auftreten kann.

Bei schlauchlosen Speichenrädern unterscheidet man sogenannte "geschlossene Speichenräder" und "offene Speichenräder". Bei offenen Speichenrädern durchsetzen die äußeren Speichenenden die Felge, was eine Abdichtung der in der Felge vorgesehenen "Speichenlöcher" erforderlich macht. Bei geschlossenen Speichenrädern sind die Speichen so an der Felgeninnenseite befestigt, dass im Bereich der Speichenenden keinerlei Verbindung zwischen der Felgeninnen- und der Felgenaußenseite, welche zusammen mit dem Reifen das Luftvolumen begrenzt, besteht.

Die eingangs erwähnte WO 2009081242 beschreibt ein schlauchloses, geschlossenes Speichenrad. Bei diesem Speichenrad sind an der Felgeninnenseite "Speichenhalter" in Umfangsrichtung voneinander beabstandet angeordnet. Jeder Speichenhalter ist durch zwei in Querrichtung des Speichenrades voneinander beabstandete Halteaugen gebildet, die jeweils mit einem Loch versehen sind. In die beiden Halteaugen ist von der Seite her ein zylindrischer Haltebolzen eingeschoben. Jeder der Haltebolzen wiederum weist eine Gewindebohrung auf, in die ein äußeres, mit einem Außengewinde versehenes Ende einer Speiche eingeschraubt wird. Das Einschrauben des Speichenendes erfolgt nach dem Einschieben des Haltebolzens in die in den Halteaugen vorgesehenen Ausnehmungen. Die inneren Speichenenden sind mit einem Kopf versehen. Bei der fertigen Montage werden nacheinander die einzelnen Speichen durch in der Nabe vorgesehene Löcher geschoben und nach dem Einsetzen der Haltebolzen in die Haltebolzen eingeschraubt. Zum Festziehen der Speichen ist an den inneren Speichenenden jeweils ein Innenmehrkant vorgesehen. Beim Festziehen kann es aufgrund der Länge der Speichen zu einer beträchtlichen Torsion der Speichen kommen. Da die Speichenhalter in der Nähe angeordnet sind, weist das Speichenrad eine vergleichsweise geringe Biegesteifigkeit auf.

Bei dem aus der EP 2 559 565 B1 bekannten Speichenrad handelt es sich ebenfalls um eine geschlossene Ausführungsform eines Speichenrades für schlauchlose Reifen. Dieses umfasst eine Nabe, die über mehrere Speichen mit einer Felge verbunden ist. Hierzu sind an einer Innenseite der Felge in Umfangsrichtung verteilt nach innen abstehende "Speichenhalter" vorgesehen, die jeweils eine "Ausnehmung" aufweisen. Innere Enden erster Speichen sind in einem Bereich links einer Radmittelebene mit der Nabe verbunden. Innere Enden zweiter Speichen sind in einem Bereich rechts neben der Radmittelebene mit der Nabe verbunden. Die in den Speichenhaltern vorgesehenen Ausnehmungen und die darin eingesetzten Zwischenelemente bzw. Haltebolzen sind zum leichten Ausgleich von Fertigungstoleranzen kreiszylindrisch ausgebildet.

Bei der Montage ist hierbei besonders sorgsam darauf zu achten, dass ein seitliches Anliegen der Speiche an den Speichenhaltern vermieden wird. Dies könnte andernfalls in ungünstigen Fällen zu unerwünschten Querbelastungen der Speichen führen.

Weitere Speichenräder sind beispielsweise aus den Druckschriften DE 20 2012 102934 U1 und NL 96 981 C bekannt.

Aufgabe der Erfindung ist es, ein Speichenrad für schlauchlose Reifen zu schaffen, das besonders einfach montierbar ist und dennoch so konzipiert ist, dass ein seitliches Anliegen der Speichen an den Speichenhaltern verhindert wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Speichenrad für schlauchlose Reifen mit einer Nabe, die über mehrere Speichen mit einer Felge verbunden ist. Hierzu sind an einer Innenseite der Felge (die Felgeninnenseite) in Umfangsrichtung verteilt nach innen abstehende "Speichenhalter" vorgesehen, die jeweils eine "Ausnehmung" aufweisen. Die Speichen, welche sich also zwischen der Nabe und den Speichenhaltern erstrecken,lassen sich begrifflich gliedern in "erste Speichen" und "zweite Speichen". Innere Enden der ersten Speichen sind in einem Bereich links einer Radmittelebene (im Folgenden auch: "die Nabenmittelebene") mit der Nabe verbunden. Innere Enden der zweiten Speichen sind in einem Bereich rechts neben der Radmittelebene mit der Nabe verbunden. Äußere Enden der Speichen sind jeweils mit einem formschlüssig in die Ausnehmung eines zugeordneten Speichenhalters eingesetzten Zwischenelements verbunden, wobei die Zwischenelemente jeweils eine Aufnahmeausnehmung zur Aufnahme eines äußeren Endabschnitts einer Speiche aufweisen. Zusätzlich weisen die Zwischenelemente jeweils einen im Wesentlichen T-förmigen Querschnitt auf. Außerdem ist die jeweilige Ausnehmung komplementär zum T-förmigen Querschnitt des jeweiligen Zwischenelements ausgebildet.

Aufgrund der T-förmigen Ausgestaltung und der gleichzeitig formschlüssigen Verbindung des jeweiligen Zwischenelements mit dem entsprechenden Speichenhalter ist es möglich eine kompakte und zugleich leicht montierbare Anbindung der Speichen an die Felge bereitzustellen.

Mit Hilfe der T-förmigen Ausgestaltung wird im Gegensatz zu zylinderförmgien Ausführungen ein erhöhter Formschluss mit dem Speichenhalter hergestellt und zusätzlich eine Anzahl von offenen Hinterschneidungen reduziert, in welchen sich andernfalls Schmutz sammeln würde. Eine Schmutzanfälligkeit kann demnach deutlich reduziert werden.

Gemäß einer Ausführungsform umfassen die Zwischenelemente jeweils einen Halteabschnitt mit einem ersten Schulterabschnitt und einem zweiten Schulterabschnitt und einen von dem Halteabschnitt weg erstreckten Führungsabschnitt, wobei der Führungsabschnitt zwischen dem ersten und dem zweiten Schulterabschnitt angeordnet und in einer Längsrichtung der jeweiligen Speiche ausgerichtet ist.

Auf diese Weise kann der T-Förmige Querschnitt bereitgestellt werden. Die beiden Schulterabschnitte sind also Teil des Halteabschnitts, welcher im Wesentlichen plattenförmig gestaltet sein kann und beispielsweise tangential zu einer Umfangsrichtung angeordnet ist. Die beiden Schulterabschnitte sind entgegengesetzt zueinander erstreckt angeordnet und weisen entsprechend jeweils in Umfangsrichtung. Der Halteabschnitt kann zum Beispiel eine ebene plattenförmige Rückseite aufweisen, mit der sich der Halteabschnitt flächig an der Felge beziehungsweise in der dortigen Ausnehmung abstützt. So kann eine Krafteinleitung in die Felge durch die flächige Anlagefläche der Zwischenelemente verbessert werden. Die Rückseite wird hierbei von einer der Nabe abgewandten Oberfläche des Halteabschnitts definiert. Mit Hilfe der plattenförmigen Rückseite wird somit eine exakte Ausrichtung des Halteabschnitts ermöglicht. Dies gilt insbesondere für den Führungsabschnitt, der sich von dem Halteabschnitt weg erstreckt. Dieser kann exakt und mit hoher Genauigkeit in die gewünschte Richtung ausgerichtet werden. Diese Richtung kann beispielsweise parallel beziehungsweise koaxial zu der Längsrichtung der zugehörigen Speiche orientiert sein. Es kann somit ein Winkel der Speiche, der sogenannte Speichenwinkel, exakt definiert und reproduzierbar sichergestellt werden. Die Montage wird entsprechend vereinfacht, da lediglich eine Einschubrichtung für das Zwischenelement in die Ausnehmung des Speichenhalters beachtet werden muss, eine jeweilige Winkelausrichtung jeder Speiche muss dagegen nicht mehr justiert werden.

Aufgrund seiner Erstreckung in Richtung der Längsrichtung der Speiche bildet der Führungsabschnitt eine Führung für die Speiche im Bereich ihrer Fixierung des äußeren Endes. Gleichzeitig können mithilfe der Führung eine seitliche Verschiebung in Richtung der Speichenhalters und ein Anliegen sowohl in einer radaxialen Querrichtung als auch in einer in Umfangsrichtung gerichteten Richtung verhindert werden. Unerwünschte seitliche Krafteinleitungen in die Speiche, welche eine Haltbarkeit beeinträchtigen könnten, werden auf diese Weise dank des T-förmigen Querschnitts des Zwischenelementes bereits konstruktiv ausgeschlossen. Mit anderen Worten dargestellt, können also durch die Vorgabe eines Speichenwinkels eine definierte Krafteinleitung sichergestellt werden die eine unerwünschte seitliche Abstützung der Speiche verhindert und somit eine Haltbarkeit deutlich verbessert.

Des Weiteren können die in den Speichenhaltern vorgesehenen Ausnehmungen "geschlitzt" sein. "Geschlitzt" bedeutet in diesem Zusammenhang, dass die Speichenhalter einen nach innen, d. h. zur Nabe hin, und zu mindestens einer Seite des Speichenhalters hin offenen Schlitz aufweisen. "Zur Seite hin offen" bedeutet in diesem Zusammenhang, dass der Schlitz in mindestens einer Richtung, die im Wesentlichen senkrecht zur Radmittelebene ist, offen ist.

Ein derartiger nach innen zur Nabe und zu mindestens einer Seite hin offener Schlitz ermöglicht eine sehr einfache Speichenmontage. Bei der Speichenmontage kann nämlich ein Endabschnitt einer Speiche von der offenen Seite des Schlitzes her einfach in die Ausnehmung eingeführt werden.

Um das äußere Ende der Speiche an dem Speichenhalter zu halten, kann das Zwischenelement die beschriebene Aufnahmeausnehmung zur Aufnahme eines äußeren Endabschnitts einer Speiche bzw. einer dort vorgesehenen Verdickung aufweisen und zusammen mit der daran "eingehängten" Speiche in die Ausnehmung des Speichenhalters eingeführt werden.

Bei dem Speichenrad, bei dem die äußeren Speichenenden über die Zwischenelemente mit den Speichenhaltern verbunden sind, kann bei der Speichenmontage beispielsweise zunächst die Speiche mit ihrem inneren Speichenende durch die in dem Zwischenelement vorgesehene Aufnahmeausnehmung gesteckt werden. Das Zwischenelement wird also auf die Speiche "aufgefädelt". Anschließend kann das Zwischenelement mit der durch die Aufnahmeausnehmung hindurch gesteckten Speiche von der Seite her in die Ausnehmung des Speichenhalters eingeführt bzw. geschoben werden, was problemlos möglich ist, sofern, wie bereits erläutert, jeder der Speichenhalter mit einem nach innen zur Nabe und zu einer Seite des Speichenhalters hin offenen Schlitz versehen ist.

Mit anderen Worten beschrieben, kann also der Führungsabschnitt des jeweils in der jeweiligen Ausnehmung angeordneten Zwischenelements zumindest teilweise in dem jeweiligen Schlitz angeordnet sein. Dadurch wird der Schlitz teilweise oder vollständig von dem Führungsabschnitt ausgefüllt. Dies bewirkt einen besonders stabilen und haltbaren Sitz und verschließt au-ßerdem den Schlitz teilweise oder vollständig, um eine Verschmutzung zu vermeiden oder zumindest zu reduzieren.

Bei einem Speichenrad gemäß dieser Beschreibung sind in jedem Fall die äußeren Enden der Speichen somit ausschließlich "formschlüssig" mit der Felge mittels der den an der Felgeninnenseite vorgesehenen Speichenhaltern verbunden. "Formschlüssig" bedeutet in diesem Zusammenhang in Abgrenzung zu der eingangs genannten WO 2009081242 "gewindelos".

Nach einer Weiterbildung der Erfindung sind die Speichen über ihre gesamte Länge gerade. Sie weisen also keine Kröpfung, Biegung o. ä. auf. Gerade Speichen sind kostengünstiger als gekröpfte oder gebogene Speichen und weisen einen optimalen Kraftfluss (ohne nennenswerte Biegemomente) auf, was das Risiko von Speichenbrüchen verringert. Eine Voraussetzung für die Verwendung gerader Speichen ist der in den Speichenhaltern vorgesehene und entsprechend angeordnete Schlitz.

Nach einer Weiterbildung der Erfindung sind die Speichen "gekreuzt" angeordnet, was dem Speichenrad eine hohe Biege- bzw. Torsionssteifigkeit verleiht. "Gekreuzt" bedeutet in diesem Zusammenhang, dass die äußeren Enden der ersten Speichen (deren innere Enden in einem Bereich links der Radmittelebene mit der Nabe verbunden sind), von Speichenhaltern gehalten werden, die sich in einem Bereich rechts der Radmittelebene befinden. Analog werden die äußeren Enden der zweiten Speichen (deren innere Enden in einem Bereich rechts der Radmittelebene mit der Nabe verbunden sind) von Speichenhaltern gehalten, die in einem Bereich links der Radmittelebene in der Innenseite der Felge angeordnet sind.

Die Speichenhalter können paarweise (links und rechts) entlang des Innenumfangs der Felge angeordnet sein. "Paarweise" bedeutet in diesem Zusammenhang, dass an einer Umfangsposition der Felge, an der sich Speichenhalter befinden, rechts neben der Radmittelebene ein einer ersten Speiche zugeordneter Speichenhalter angeordnet ist und dass an derselben Umfangsposition, jedoch links der Radmittelebene, ein einer zweiten Speiche zugeordneter Speichenhalter angeordnet ist.

Die inneren Enden der Speichen können über Speichennippel mit der Nabe verbunden sein. Die Speichennippel können in zugeordnete Durchgangslöcher, die in der Nabe vorgesehen sind, formschlüssig eingesetzt sein. Die Speichennippel weisen jeweils ein Innengewinde auf, in das ein mit einem Außengewinde versehenes Ende einer Speiche eingeschraubt ist. Aufgrund der gekreuzten Anordnung der Speichen und der dadurch bedingten Schrägstellung der Speichen kreuzen "gedachte Verlängerungen" der Speichen die Nabe "sekantenartig" (in Abgrenzung zu machen Speichenrädern des Standes der Technik, bei denen die Speichen nahezu tangential bezüglich der Nabe angeordnet sind). Bei dem erfindungsgemäßen Konzept können die Speichennippel so angeordnet werden, dass sie von schräg seitlich der Nabe aus zugänglich, d.h. anziehbar sind.

Zum Anziehen der Speichennippel können diese mit einem Innenmehrkant oder auch, sofern sie hinreichend weit aus den in der Nabe vorgesehenen Durchgangsnippellöchern herausstehen, mit einem Außenmehrkant oder einer anderen "Profilierung" versehen sein. Bei diesem Konzept werden die Speichen beim Anziehen der Speichennippel im Unterschied zu der eingangs erwähnten WO 2009081242 A1 kaum bzw. nur unwesentlich tordiert.

Nach einer Weiterbildung der Erfindung werden die Zwischenelemente durch die die Speichen hindurch gesteckt sind, entlang ihrer gesamten Länge von den Speichenhaltern gehalten. Dies ist ebenfalls ein weiterer Unterschied gegenüber der eingangs erwähnten WO 2009081242, da bei dem dort beschriebenen Speichenrad lediglich die Enden der Haltebolzen von Halteaugen gehalten werden, nicht aber die Haltebolzen über ihre gesamte Länge. Die Zwischenelemente können aus einem Leichtmetall hergestellt sein, wodurch sich das Gewicht und das Trägheitsmoment des Speichenrades verringert.

Die Zwischenelemente können mit einer zur Form der an den äußeren Speichenenden vorgesehenen Verdickungen komplementären "Sitzmulde" versehen sein. Nach dem "Hindurchfädeln" einer Speiche durch die in dem Zwischenelement vorgesehene Aufnahmeausnehmung liegt die am äußeren Speichenende vorgesehene Verdickung auf der Sitzmulde auf. Die am äußeren Speichenende vorgesehene Verdickung kann z. B. kugelförmig bzw. kugel-karlottenförmig, tonnenartig bzw. kreiszylindrisch, elliptisch, linsenkopfartig o. ä. ausgebildet sein.

Vorzugsweise sind die Sitzmulde, die am äußeren Speichenende vorgesehene Verdickung und die in dem zugeordneten Zwischenelement vorgesehene Aufnahmeausnehmung so aufeinander abgestimmt, dass die Speiche zum Ausgleich von Fertigungstoleranzen zumindest geringfügig schwenkbar ist.

Zusammenfassend werden mit der Erfindung insbesondere folgende Vorteile erreicht:
- Ein Speichenrad gemäß der Erfindung weist feste Speichenwinkel auf, die eine exakte und reproduzierbare Ausrichtung der Speichen ohne aufwendige Justierung jeder einzelnen Speiche ermöglichen,
- Der Formschluss des Zwischenelements und der Ausnehmung verringern eine Verschmutzungsneigung,
- Das Speichenrad weist außerdem eine hohe Quersteifigkeit bei geringem Gewicht auf.
- Es können gerade Speichen verwendet werden.
- Eine maschinelle Montage, insbesondere ein maschinelles Anziehen der an der Nabe vorgesehenen Speichennippel ist möglich.
- Da die Zwischenelemente auf ihrer gesamten Länge in den Ausnehmungen der Speichenhalter aufliegen, ergeben sich vergleichsweise geringe Flächenpressungen.
- Aufgrund der aufeinander geometrisch abgestimmten Form der Verdickung und der Sitzmulde ergibt sich auch zwischen der Verdickung und der Sitzmulde des Zwischenelements eine vergleichsweise geringe Flächenpressung, was das Speichenrad besonders geländetauglich macht (da im Gelände sehr hohe Spannungsspitzen in den Speichen auftreten können).

Im Folgenden wird die Erfindung im Zusammenhang mit der Zeichnung näher erläutert. Es zeigen:
- Figur 1: ein Speichenrad gemäß der Erfindung in Seitenansicht;
- Figur 2: das Speichenrad der Figur 1 in perspektivischer Darstellung;
- Figur 3: einen Speichenhalter und eine Speiche gemäß der Erfindung in vergrößerter Darstellung;
- Figur 4: die Speiche mit T-förmigem Zwischenelement gemäß Fig. 3;
- Figur 5: die Speiche aus Fig. 3 in einer weiteren Ansicht;
- Figur 6: eine Detailansicht des T-förmigen Zwischenelements;
- Figur 7: eine Schnittansicht des Speichenrades gemäß Fig. 1;
- Figur 8: eine Detailansicht des äußeren Speichenendes aus Fig. 7.

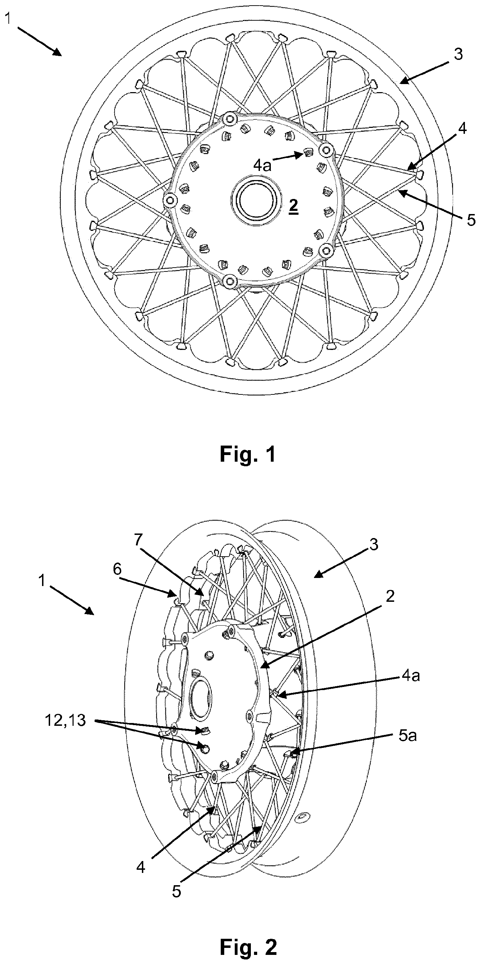

Die Figuren 1, 2 zeigen ein schlauchloses Speichenrad 1 für schlauchlose Reifen. Das Speichenrad 1 weist eine Nabe 2 und eine Felge 3 auf. Die Nabe 2 ist über eine Vielzahl von Speichen 4, 5, mit der Felge 3 verbunden.

Bei den Speichen 4, 5 können erste Speichen 4 und zweite Speichen 5 (vgl. Figur 2) unterschieden werden. Unter ersten Speichen 4 werden Speichen verstanden, deren innere Enden 4a in einem Bereich links einer Radmittelebene mit der Nabe 2 verbunden sind. Unter zweiten Speichen 5 werden Speichen verstanden, deren innere Enden 5a in einem Bereich rechts der Radmittelebene mit der Nabe 2 verbunden sind.

An einer Felgeninnenseite sind in Umfangsrichtung der Felge 3 verteilt nach innen abstehende linke bzw. rechte Speichenhalter 6 bzw. 7 angeordnet. Wie aus Figur 2 ersichtlich ist, sind die Speichenhalter 6, 7 in Umfangsrichtung der Felge 3 jeweils paarweise angeordnet. "Paarweise" angeordnet bedeutet in diesem Zusammenhang, dass an einer Umfangsposition, an der sich Speichenhalter, z. B. die Speichenhalter 6 und 7 befinden, rechts der Radmittelebene ein einer ersten Speiche zugeordneter Speichenhalter 7 und an derselben Umfangsposition, jedoch links der Radmittelebene, ein einer zweiten Speiche zugeordneter Speichenhalter 6 angeordnet ist. Die paarweise Anordnung der Speichenhalter 6,7 bewirkt eine verbesserte Quersteifigkeit durch Anordnung der Speichenhalter beziehungsweise der darin gehaltenen Zwischenelemente 14 außerhalb der Felgenmittenebene.

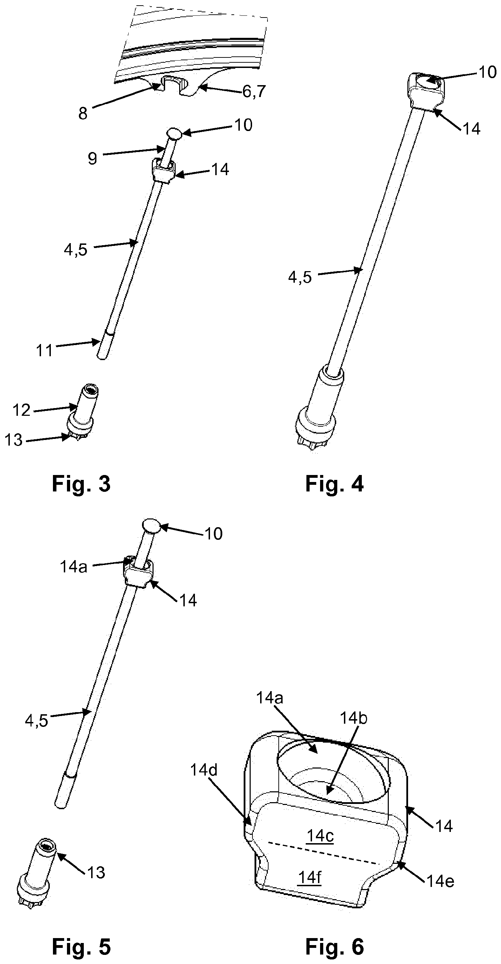

Die Speichenhalter 6,7 stehen, wie z. B. aus Figur 1 oder 2 ersichtlich ist, etwas radial nach innen von der Felgeninnenseite ab. Sie weisen jeweils eine Ausnehmung 8 (vgl. Figur 3) auf, die komplementär zum T-förmigen Querschnitt des Zwischenelements 14 ausgebildet ist, um einen Formschluss durch seitliches Einführen des Zwischenelements 14 herzustellen. Hierzu weist das Zwischenelement 14 in der Einschubrichtung einen konstanten oder einen sich verjüngenden Querschnitt (den T-förmigen Querschnitt) auf. Dieser T-förmige Querschnitt wird beispielsweise dadurch gebildet, dass die Zwischenelemente 14 jeweils einen Halteabschnitt 14c mit einem ersten Schulterabschnitt 14d und einem zweiten Schulterabschnitt 14e und einen von dem Halteabschnitt 14c weg erstreckten Führungsabschnitt 14f umfasst, wobei der Führungsabschnitt 14f zwischen dem ersten 14d und dem zweiten Schulterabschnitt 14e angeordnet und in einer Längsrichtung der jeweiligen Speiche 4,5 ausgerichtet ist. Im montierten Zustand (vgl. Fig. 1 und 2) sind der erste 14d und der dem ersten entgegengesetzt angeordnete zweite Schulterabschnitt 14e im Wesentlichen in Umfangsrichtung ausgerichtet.

Wie z. B. aus den Figuren 3 bis 5 ersichtlich ist, ist die Ausnehmung 8 geschlitzt. "Geschlitzt" bedeutet, dass sie nach innen, d. h. in Richtung zur Nabe 2 hin und zu mindestens einer Seite des Speichenhalters 6, 7 hin offen ist, so dass bei der Speichenmontage ein Endabschnitt 9 einer Speiche 4, 5 von der offenen Seite des Schlitzes her in die Ausnehmung 8 des Speichenhalters 6, 7 einführbar ist. Wie insbesondere in den Fig. 1 und 2 dargestellt, ist der Führungsabschnitt 14f des jeweils in der jeweiligen Ausnehmung 8 angeordneten Zwischenelements 14 vollständig in dem jeweiligen Schlitz des Speichenhalters 6,7 angeordnet und verschließt diesen im montierten Zustand vollständig, so dass eine Verschmutzung wirkungsvoll vermieden wird.

Wie aus Figur 3 ersichtlich ist, weist die Speiche 4, 5 an ihrem äußeren Ende 9 eine Verdickung 10 auf. Beim Ausführungsbeispiel der Figur 3 ist die Verdickung 10 so gestaltet, dass sie unmittelbar in das Zwischenelement 14 eingeführt wird, welches wiederum in die Ausnehmung 8 eingehängt werden kann.

Das radial innere Ende 11 der Speiche 4, 5 ist in einen Speichennippel 12 eingeschraubt. Der Speichennippel 12 wiederrum ist in eine zugeordnete, in der Nabe 2 vorgesehene Ausnehmung bzw. ein Durchgangsloch eingesetzt. Der Speichennippel 12 weist einen Außenmehrkant 13 auf, mittels dessen der Speichennippel 12 und somit die Speiche 4,5 bei der Montage angezogen werden kann.

Wie aus den Fig. 5 und 6 erkennbar, weist das Zwischenelement 14 einen im Wesentlichen T-förmigen Querschnitt mit einer "Sitzmulde 14a" und einer das Zwischenelement 14 durchsetzenden Aufnahmeausnehmung 14b auf. Bei der Speichenmontage wird zunächst das Zwischenelement 14 vom unteren Speichenende 11 her auf die Speiche 4, 5 "aufgefädelt" und nach oben geschoben, bis die Verdickung 10 auf der Sitzmulde 14a des Zwischenelements 14 aufsitzt.

Anschließend wird das Zwischenelement 14 und die durch die Aufnahmeausnehmung 14b hindurch gesteckte Speiche 4, 5 von einer Seite der Felge 3 her in die Ausnehmung 8 des Speichenhalters 6, 7 eingeführt.

Bei dem in den Figuren 3,4,5 gezeigten Ausführungsbeispiel weist die Verdickung 10 eine kugelförmige oder kugelkarlottenförmige Form auf. Die Sitzmulde 14a ist hierzu komplementär gestaltet.

Aufgrund der kugelförmigen bzw. kugel-karlottenförmigen Gestalt der Verdickung 10 und der hierzu komplementär geformten Sitzmulde 14a kann die Speiche 4, 5 zusätzlich in Richtungen quer zu der Längsrichtung des Zwischenelements 14 in gewissem Umfang verschwenkt werden, so dass auch Biegemomente um solche Achsen vermieden werden.

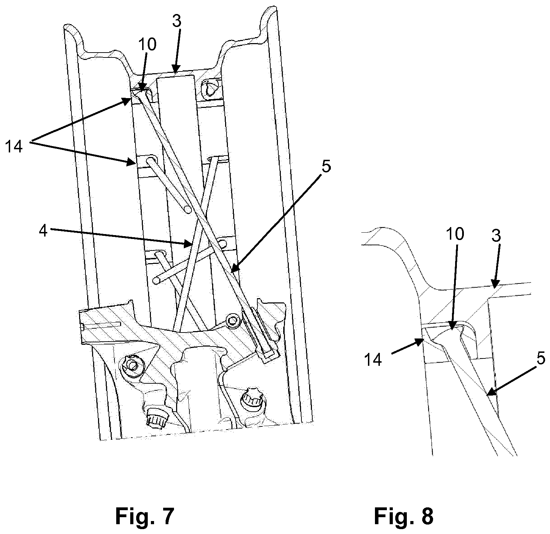

Figuren 7 und 8 zeigen die in den Figuren 3,4,5 gezeigte Speiche 4, 5 in eingebautem Zustand. Es ist ersichtlich, dass die Verdickung 10 unmittelbar in die Aufnahmeausnehmung 14b des Zwischenelements 14 eingesetzt ist.

## Patentansprüche

1. Speichenrad (1) für schlauchlose Reifen, mit
- einer Nabe (2),
- einer Felge (3), wobei an einer Felgeninnenseite in Umfangsrichtung verteilt nach innen abstehende Speichenhalter (6, 7) vorgesehen sind, die jeweils eine Ausnehmung (8) aufweisen, und
- mehreren Speichen (4, 5), welche sich zwischen der Nabe (2) und den Speichenhaltern (6, 7) erstrecken, wobei
- innere Enden (11) erster Speichen (4) in einem Bereich links einer Nabenmittelebene mit der Nabe (2) verbunden sind, und
- innere Enden (11) zweiter Speichen (5) in einem Bereich rechts neben der Nabenmittelebene mit der Nabe (2) verbunden sind,
wobei äußere Enden (9) der Speichen (4, 5) jeweils mit einem formschlüssig in die Ausnehmung (8) eines zugeordneten Speichenhalters (6, 7) eingesetzten Zwischenelement (14) verbunden sind, wobei die Zwischenelemente (14) jeweils eine Aufnahmeausnehmung (14b) zur Aufnahme eines äußeren Endabschnitts (9) einer Speiche (4, 5) aufweisen, **dadurch gekennzeichnet, dass**
die Zwischenelemente (14) jeweils einen im Wesentlichen T-förmigen Querschnitt aufweisen, und die jeweilige Ausnehmung (8) komplementär zum T-förmigen Querschnitt des jeweiligen Zwischenelements (14) ausgebildet ist.

2. Speichenrad nach Anspruch 1, **dadurch gekennzeichnet, dass** die Zwischenelemente jeweils einen Halteabschnitt mit einem ersten Schulterabschnitt und einem zweiten Schulterabschnitt und einen von dem Halteabschnitt weg erstreckten Führungsabschnitt umfassen, wobei der Führungsabschnitt zwischen dem ersten und dem zweiten Schulterabschnitt angeordnet und in einer Längsrichtung der jeweiligen Speiche ausgerichtet ist.

3. Speichenrad nach Anspruch 1 oder 2, **dadurch gekennzeichnet, dass** die in den Speichenhaltern (6, 7) vorgesehenen Ausnehmungen (8) jeweils einen nach innen zur Nabe (2) und zu einer Seite des Speichenhalters (6, 7) hin offenen Schlitz aufweisen, so dass bei der Speichenmontage ein Endabschnitt (9) einer Speiche (4, 5) von der offenen Seite des Schlitzes her in die Ausnehmung (8) des Speichenhalters (6, 7) einführbar ist.

4. Speichenrad nach Anspruch 3, **dadurch gekennzeichnet, dass** der Führungsabschnitt des jeweils in der jeweiligen Ausnehmung (8) angeordneten Zwischenelements (14) zumindest teilweise in dem jeweiligen Schlitz angeordnet ist.

5. Speichenrad nach einem der Ansprüche 1 bis 4, **dadurch gekennzeichnet, dass** die Speichen (4, 5) über ihre gesamte Länge gerade sind.

6. Speichenrad nach einem der Ansprüche 1 bis 5, **dadurch gekennzeichnet, dass** die ersten Speichen (4) von Speichenhaltern (6), die sich in einem Bereich rechts der Radmittelebene befinden, gehalten werden, und die zweiten Speichen (5) von Speichenhaltern (7), die sich in einem Bereich links der Nabenmittelebene befinden, gehalten werden.

7. Speichenrad nach einem der vorangehenden Ansprüche 1 bis 6, **dadurch gekennzeichnet, dass** die Speichenhalter (6, 7) paarweise entlang des Umfangs der Felge (3) angeordnet sind, derart, dass an einer Umfangsposition, an der sich Speichenhalter (6, 7) befinden, rechts der Radmittelebene ein einer ersten Speiche (4) zugeordneter Speichenhalter (6) angeordnet ist und an derselben Umfangsposition, jedoch links der Nabenmittelebene ein einer zweiten Speiche (5) zugeordneter Speichenhalter (7) angeordnet ist.

8. Speichenrad nach einem der vorangehenden Ansprüche 1 bis 7, **dadurch gekennzeichnet, dass** die inneren Enden (11) der Speichen (4, 5) jeweils in einen Speichennippel (12) eingeschraubt sind, wobei die Speichennippel in zugeordnete Durchgangsnippellöcher der Nabe (2) formschlüssig eingesetzt sind.

9. Speichenrad nach Anspruch 8, **dadurch gekennzeichnet, dass** die Speichennippel (12) jeweils einen Innenmehrkant oder Außenmehrkant (13) aufweisen, der von schräg seitlich der Nabe (2) aus zugänglich ist.

10. Speichenrad nach einem der Ansprüche 1 bis 9, **dadurch gekennzeichnet, dass** die Zwischenelemente (14) entlang ihrer gesamten Länge von den Speichenhaltern (6, 7) gehalten werden.

11. Speichenrad nach einem der Ansprüche 1 bis 10, **dadurch gekennzeichnet, dass** es sich bei der Aufnahmeausnehmung (14b) eines jeden Zwischenelements (14) um eine das Zwischenelement (14) durchsetzende Aufnahmeausnehmung (14b) handelt, durch die sich der äußere Endabschnitt (9) der zugeordneten Speiche (4, 5) hindurch erstreckt, wobei am äußeren Ende (9) der zugeordneten Speiche (4, 5) eine Verdickung (10) vorgesehen ist, welche formschlüssig von einer radialen Außenseite her auf das Zwischenelement (14) aufgesetzt ist.

12. Speichenrad nach Anspruch 11, **dadurch gekennzeichnet, dass** die Zwischenelemente (14) jeweils eine Sitzmulde (14a) aufweisen, auf der, von einer Außenseite der Felge (3) her betrachtet, die Verdickung (10) aufliegt, wobei die in dem Zwischenelement (14) vorgesehene, von dem äu-ßeren Endabschnitt (9) einer Speiche (4, 5) durchsetzte Aufnahmeausnehmung (14b) in die Sitzmulde (14a) mündet.

13. Speichenrad nach Anspruch 12, **dadurch gekennzeichnet, dass** die Sitzmulde (14a) die Verdickung (10) und die in dem Zwischenelement (14) vorgesehene Aufnahmeausnehmung (14b) so aufeinander abgestimmt sind, dass die Speiche (4, 5) zum Ausgleich von Fertigungstoleranzen zumindest geringfügig relativ zu dem Zwischenelement (14) schwenkbar ist.

## Claims

1. Spoked wheel (1) for tubeless tyres, with
- a hub (2),
- a rim (3), inwardly projecting spoke holders (6, 7) being provided distributed in the circumferential direction on a rim inner side, and
- a plurality of spokes (4, 5) which extend between the hub (2) and the spoke holders (6, 7),
- inner ends (11) of first spokes (4) being connected to the hub (2) in a region to the left of a hub centre plane, and
- inner ends (11) of second spokes (5) being connected to the hub (2) in a region to the right of the hub centre plane,
outer ends (9) of the spokes (4, 5) being connected in each case to an intermediate element (14) which is inserted in a positively locking manner into the recess (8) of an associated spoke holder (6, 7), the intermediate elements (14) in each case having a receiving recess (14b) for receiving an outer end section (9) of a spoke (4, 5),
**characterized in that**
the intermediate elements (14) in each case have a substantially T-shaped cross section, and the respective recess (8) is of complementary configuration with respect to the T-shaped cross section of the respective intermediate element (14).

2. Spoked wheel according to Claim 1, **characterized in that** the intermediate elements in each case comprise a holding section, with a first shoulder section and a second shoulder section, and a guide section which extends away from the holding section, the guide section being arranged between the first and the second shoulder section and being oriented in a longitudinal direction of the respective spoke.

3. Spoked wheel according to Claim 1 or 2, **characterized in that** the recesses (8) which are provided in the spoke holders (6, 7) in each case have a slot which is open to the inside towards the hub (2) and towards a side of the spoke holder (6, 7), with the result that, during spoke assembly, an end section (9) of a spoke (4, 5) can be introduced from the open side of the slot into the recess (8) of the spoke holder (6, 7).

4. Spoked wheel according to Claim 3, **characterized in that** the guide section of the intermediate element (14) which is arranged in each case in the respective recess (8) is arranged at least partially in the respective slot.

5. Spoked wheel according to one of Claims 1 to 4, **characterized in that** the spokes (4, 5) are straight over their entire length.

6. Spoked wheel according to one of Claims 1 to 5, **characterized in that** the first spokes (4) are held by spoke holders (6) which are situated in a region to the right of the wheel centre plane, and the second spokes (5) are held by spoke holders (7) which are situated in a region to the left of the hub centre plane.

7. Spoked wheel according to one of the preceding Claims 1 to 6, **characterized in that** the spoke holders (6, 7) are arranged in pairs along the circumference of the rim (3) in such a way that a spoke holder (6) which is assigned to a first spoke (4) is arranged at a circumferential position, at which spoke holders (6, 7) are situated, to the right of the wheel centre plane, and a spoke holder (7) which is assigned to a second spoke (5) is arranged at the same circumferential position, but to the left of the hub centre plane.

8. Spoked wheel according to one of the preceding Claims 1 to 7, **characterized in that** the inner ends (11) of the spokes (4, 5) are screwed in each case into a spoke nipple (12), the spoke nipples being inserted in a positively locking manner into associated passage nipple holes of the hub (2).

9. Spoked wheel according to Claim 8, **characterized in that** the spoke nipples (12) in each case have a polygon socket or external polygon (13) which is accessible from obliquely to the side of the hub (2).

10. Spoked wheel according to one of Claims 1 to 9, **characterized in that** the intermediate elements (14) are held along their entire length by the spoke holders (6, 7) .

11. Spoked wheel according to one of Claims 1 to 10, **characterized in that** the receiving recess (14b) of each intermediate element (14) is a receiving recess (14b) which penetrates the intermediate element (14) and through which the outer end section (9) of the associated spoke (4, 5) extends, a thickened portion (10) being provided at the outer end (9) of the associated spoke (4, 5), which thickened portion (10) is placed in a positively locking manner from a radial outer side onto the intermediate element (14).

12. Spoked wheel according to Claim 11, **characterized in that** the intermediate elements (14) in each case have a seating depression (14a), on which, as viewed from an outer side of the rim (3), the thickened portion (10) lies, the receiving recess (14b) which is provided in the intermediate element (14) and is penetrated by the outer end section (9) of a spoke (4, 5) opening into the seating depression (14a).

13. Spoked wheel according to Claim 12, **characterized in that** the seating depression (14a), the thickened portion (10) and the receiving recess (14b) which is provided in the intermediate element (14) are adapted to one another in such a way that the spoke (4, 5) can be pivoted at least slightly relative to the intermediate element (14) for the compensation of manufacturing tolerances.

## Revendications

1. Roue à rayons (1) pour pneus sans chambre à air, comportant,
- un moyeu (2),
- une jante (3), des supports de rayons (6, 7) faisant saillie vers l'intérieur de manière répartie dans la direction périphérique étant prévus sur un côté intérieur de jante, lesquels comprennent respectivement un évidement (8), et
- plusieurs rayons (4, 5), lesquels s'étendent entre le moyeu (2) et les supports de rayons (6, 7),
• les extrémités intérieures (11) des premiers rayons (4) étant reliées au moyeu (2) dans une région à gauche d'un plan médian du moyeu, et
• les extrémités intérieures (11) des deuxièmes rayons (5) étant reliées au moyeu (2) dans une région à droite à côté du plan médian du moyeu,
les extrémités extérieures (9) des rayons (4, 5) étant reliées respectivement à un élément intermédiaire (14) inséré par complémentarité de forme dans l'évidement (8) d'un support de rayon (6, 7) associé, les éléments intermédiaires (14) comprenant respectivement un évidement de réception (14b) servant à recevoir une partie d'extrémité extérieure (9) d'un rayon (4, 5),
**caractérisée en ce que**
les éléments intermédiaires (14) présentent respectivement une section transversale sensiblement en forme de T, et l'évidement (8) respectif est formé de manière complémentaire à la section transversale en forme de T de l'élément intermédiaire (14) respectif.

2. Roue à rayons selon la revendication 1, **caractérisée en ce que** les éléments intermédiaires comportent respectivement une partie de retenue dotée d'une première partie d'épaulement et d'une deuxième partie d'épaulement et une partie de guidage s'étendant à l'écart de la partie de retenue, la partie de guidage étant disposée entre la première et la deuxième partie d'épaulement et orientée dans une direction longitudinale du rayon respectif.

3. Roue à rayons selon la revendication 1 ou 2, **caractérisée en ce que** les évidement (9) prévus dans les supports de rayons (6, 7) comprennent respectivement une fente ouverte vers l'intérieur vers le moyeu (2) et d'un côté du support de rayon (6, 7), de sorte que lors du montage des rayons, une partie d'extrémité (9) d'un rayon (4, 5) peut être insérée depuis le côté ouvert de la fente dans l'évidement (8) du support de rayon (6, 7).

4. Roue à rayons selon la revendication 3, **caractérisée en ce que** la partie de guidage de l'élément intermédiaire (14) disposé respectivement dans l'évidement (8) respectif est disposée au moins partiellement dans la fente respective.

5. Roue à rayons selon l'une des revendications 1 à 4, **caractérisée en ce que** les rayons (4, 5) sont rectilignes sur toute leur longueur.

6. Roue à rayons selon l'une des revendications 1 à 5, **caractérisée en ce que** les premiers rayons (4) sont retenus par des supports de rayons (6) qui se trouvent dans une région à droite du plan médian de la roue, et les deuxièmes rayons (5) sont retenus par des supports de rayons (7) qui se trouvent dans une région à gauche du plan médian du moyeu.

7. Roue à rayons selon l'une des revendications précédentes 1 à 6, **caractérisée en ce que** les supports de rayons (6, 7) sont répartis par paires le long de la périphérie de la jante (3), de sorte qu'un support de rayon (6) associé à un premier rayon (4) est disposé à une position périphérique à laquelle des supports de rayons (6, 7) se trouvent, à droite du plan médian de la roue, et qu'un support de rayons (7) associé à un deuxième rayon (5) est disposé à la même position périphérique, mais à gauche du plan médian du moyeu.

8. Roue à rayons selon l'une des revendications précédentes 1 à 7, **caractérisée en ce que** les extrémités intérieures (11) des rayons (4, 5) sont vissées respectivement dans un nipple de rayon (12), les nipples de rayon étant insérés avec complémentarité de forme dans des orifices traversants pour nipple du moyeu (2).

9. Roue à rayons selon la revendication 8, **caractérisée en ce que** les nipples de rayon (12) comprennent respectivement un contour polygonal intérieur ou un contour polygonal extérieur (13) qui est accessible de manière oblique latéralement par rapport au moyeu (2).

10. Roue à rayons selon l'une des revendications 1 à 9, **caractérisée en ce que** les éléments intermédiaires (14) sont retenus sur toute leur longueur par les supports de rayons (6, 7).

11. Roue à rayons selon l'une des revendications 1 à 10, **caractérisée en ce que** l'évidement de réception (14b) de chaque élément intermédiaire (14) est un élément de réception (14b) traversant l'élément intermédiaire (14) et à travers lequel s'étend la partie d'extrémité extérieure (9) du rayon (4, 5) associé, un renflement (10) étant prévu à l'extrémité extérieure (9) du rayon (4, 5) associé, lequel renflement est placé avec complémentarité de forme sur l'élément intermédiaire (14) depuis un côté extérieur radial.

12. Roue à rayons selon la revendication 11, **caractérisée en ce que** les éléments intermédiaires (14) comprennent respectivement une cavité formant siège (14a), sur laquelle repose le renflement (10), considéré depuis un côté extérieur de la jante (3), l'évidement de réception (14b) prévu dans l'élément intermédiaire (14) et traversé par la partie d'extrémité extérieure (9) d'un rayon (4, 5) débouchant dans la cavité formant siège (14a).

13. Roue à rayons selon la revendication 12, **caractérisée en ce que** la cavité formant siège (14a), le renflement (10) et l'évidement de réception (14b) prévu dans l'élément intermédiaire (14) sont adaptés les uns aux autres de telle sorte que le rayon (4, 5) peut pivoter au moins légèrement par rapport à l'élément intermédiaire (14) pour la compensation de tolérances de fabrication.
